**Europäisches Patentamt**

**European Patent Office**

**Office européen des brevets**

(11) Veröffentlichungsnummer: **0 503 025 B1**

# EUROPÄISCHE PATENTSCHRIFT

(45) Veröffentlichungstag der Patentschrift: **24.08.94**

(51) Int. Cl.5: **B60T 8/00**

(21) Anmeldenummer: **91916570.4**

(22) Anmeldetag: **26.09.91**

(86) Internationale Anmeldenummer:
**PCT/EP91/01840**

(87) Internationale Veröffentlichungsnummer:
**WO 92/05986 (16.04.92 92/09)**

(54) **Verfahren zum Betrieb eines Antiblockierregelsystems.**

(30) Priorität: **28.09.90 DE 4030724**

(43) Veröffentlichungstag der Anmeldung:
**16.09.92 Patentblatt 92/38**

(45) Bekanntmachung des Hinweises auf die
Patenterteilung:
**24.08.94 Patentblatt 94/34**

(84) Benannte Vertragsstaaten:
**CH DE FR LI SE**

(56) Entgegenhaltungen:
**WO-A-85/02590**
**WO-A-87/02948**
**WO-A-89/02384**
**DE-A- 3 942 683**

(73) Patentinhaber: **ROBERT BOSCH GMBH**
**Postfach 30 02 20**
**D-70442 Stuttgart (DE)**

(72) Erfinder: **EHRET, Thomas**
**Hindenburgstr. 33**
**D-7633 Seelbach (DE)**

Erfinder: **KOST, Friedrich**
**Johannes-Brahms-Str. 1**
**D-7014 Kornwestheim (DE)**
Erfinder: **HARTMANN, Uwe**
**Olgastr. 79**
**D-7000 Stuttgart 1 (DE)**
Erfinder: **ERHARDT, Rainer**
**Am Wallgraben 18**
**D-7000 Stuttgart 80 (DE)**
Erfinder: **VAN ZANTEN, Anton**
**Waldstrasse 15/2**
**D-7257 Ditzingen 4 (DE)**
Erfinder: **BUSCH, Gerd**
**Karlsbaderstrasse 53**
**D-7016 Gerlingen (DE)**
Erfinder: **WEISS, Karl-Josef**
**Hausgärten 3**
**D-7050 Waiblingen (DE)**
Erfinder: **RUF, Wolf-Dieter**
**Schlatthölzlesweg 17**
**D-7076 Waldstetten (DE)**
Erfinder: **WIETELMANN, Jürgen**
**Hohe Str. 16**
**D-7257 Ditzingen 5 (DE)**

EP 0 503 025 B1

(74) Vertreter: **Kammer, Arno, Dipl.-Ing.**
**ROBERT BOSCH GmbH**
**Zentralabteilung Patente**
**Postfach 30 02 20**
**D-70442 Stuttgart (DE)**

**Beschreibung**

Stand der Technik

Die Erfindung geht aus von bekannten Antiblockierregelsystemen, bei denen der Bremsdruck an den einzelnen Rädern bei Überschreiten von Schwellen erhöht, erniedrigt und evt. konstantgehalten wird, siehe DE-A-3 402 795.

Vorteile der Erfindung

Der besondere Vorteil des erfindungsgemäßen ABS ist, daß es als unterlagerter Regler eines überlagerten Fahrzeugdynamikreglers verwendet werden kann, welcher Sollschlupfwerte für die Fahrzeugräder vorgibt, um die Beherschbarkeit des Fahrzeugs zu erhöhen. Die Schlupfwerte des Fahrzeugreglers und des ABS werden nun überlagert und danach der Bremsdruck eingesteuert.

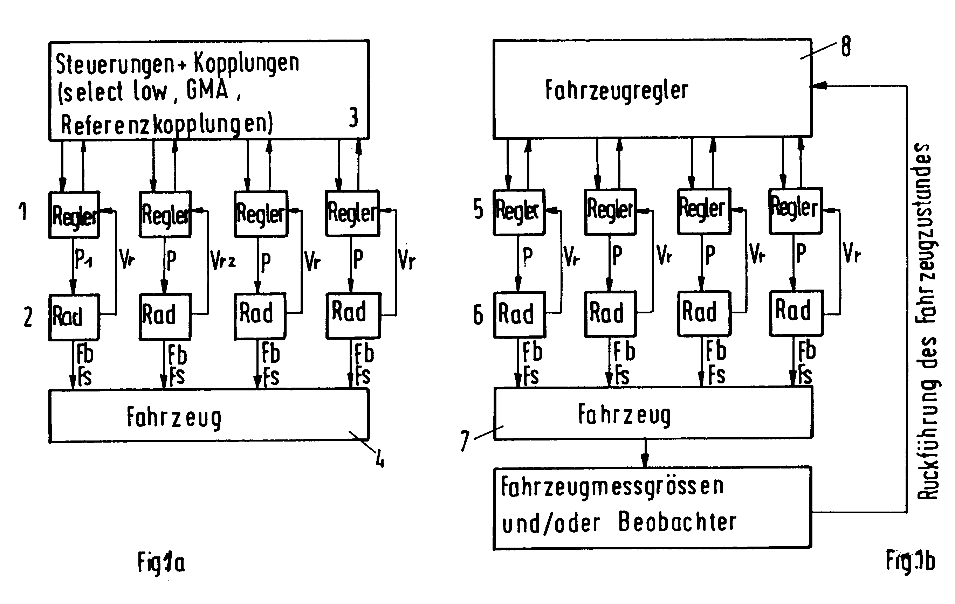

Die Grundstruktur herkömmlicher Antiblockiersysteme zeigt Fig. 1a. Während hier die Regler 1 für die einzelnen Fahrzeugräder 2 über einen Block 3 aus Steuerungen miteinander verkoppelt sind, bilden in einem erfindungsgemäßen Fahrzeugregelungssystem gemäß Fig. 1 b die Radregler 5 Kreise, die einem Fahrzeugregler 8 unterlagert sind. Diese Kaskadenstruktur stellt an die unterlagerten Radregler 5 besondere Anforderungen im Hinblick auf deren dynamischen Eigenschaften: sie müssen in einem höheren Frequenzbereich arbeiten als der überlagerte Regler. Außerdem müssen sie geeignete Schnittstellen zum Fahrzeugregler besitzen.

In Übereinstimmung mit dem in der DE-A1-3840 456 und der Patentanmeldung P 4030704.2 beschriebenen Fahrzeugregelungskonzept werden hier Bremsschlupfwerte als Regelgrößen der Radregler gewählt. Zur Bildung der Schlupfwerte müssen die freirollenden Radgeschwindigkeiten (d.h., die Radumfangsgeschwindigkeiten, die sich ohne Brems- oder Antriebsmoment einstellen) bekannt sein. Ein Verfahren zur Schätzung dieser Grössen beschreibt die Patentanmeldung P 40 24 815.1 und findet hier Anwendung.

Gemäß dem in der P 4030704.2 vorgeschlagenen Fahrzeugregelungssystem entfallen auf die erfindungsgemäße Schlupfregelung insgesamt folgende Aufgaben:

- Berechnung eines Sollwerts für den "Reifenschlupf" aus der ABS-Regelung zur Arbeitspunktvorgabe.
- Möglichst schnelle stabile Regelung auf Bremsschlupfsollwerte, die - abhängig vom Fahrzeugreglereingriff - in weiten Grenzen von oben genannten Arbeitspunkt abweichen können.
- Schätzung der Bremskräfte.
- Schätzung der Fahrzeuglängsgeschwindigkeit.

Aus diesen Aufgaben folgen weitere:

- Schätzung der Radbremsdrücke (mittels eines Hydraulikmodells).
- Berechnung geeigneter Ventilansteuerung (mittels eines inversen Hydraulikmodells).

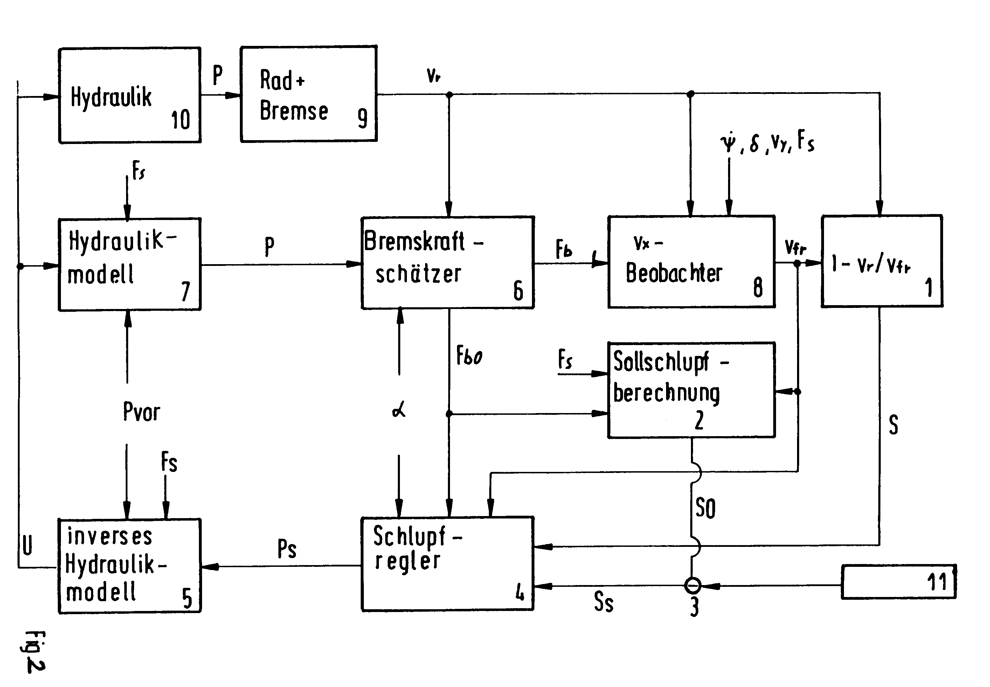

Das Gesamtkonzept des erfindungsgemäßen unterlagerten ABS-Reglers ist in Fig. 2 dargestellt.

Am Rad 9 wird die Radgeschwindigkeit $V_r$ gemessen und einem Schlupfbildner 1 zugeführt. Diesem könnte auch die in irgend einer Weise gemessene freirollende Radgeschwindigkeit $V_{fr}$ zugeführt werden. Tatsächlich wird ihm von einem $V_{fr}$-Beobachter 8 die in ihm ermittelte Geschwindigkeit des freirollenden Rads $V_{fr}$ zugeführt, wodurch eine Messung der freirollenden Radgeschwindigkeit, bzw. der Fahrzeuglängsgeschwindigkeit überflüssig wird.

Der Beobachter 8 ermittelt aus den Größen Giergeschwindigkeit $\Psi^\cdot$, Lenkwinkel $\delta$, Quergeschwindigkeit Vy, und den Seitenführungskräfte $F_S$, den Bremskräften Fb und den Radgeschwindigkeit aller Räder die Größe $V_{fr}$.

Hierbei sind $\Psi^\cdot$ und $\delta$ Meßgrößen, während Vy und $F_S$ geschätzte Größen sind. Im Schlupfbildner 1 wird aus Vr und $V_{fr}$ der Schlupfwert S = $(1 - Vr/V_{fr})$ gebildet und einem Schlupfregler 4 zugeführt. Diesem wird zusätzlich ein in einem Block 2 ermittelter Sollschlupf SO, sowie die Größen $V_{fr}$, Schräglaufwinkel $\alpha$ und die mittlere Bremskraft Fb0 zugeführt. Auf die Berechnung des Sollbremsdrucks Ps aus diesen Größen wird später eingegangen.

In einem weiteren Block 5 wird mit Hilfe eines inversen Hydraulikmodells und unter Nutzung der Größen Vordruck $P_{vor}$ und Seitenführungskraft Fs die Ansteuerzeit U berechnet, mit der ein in einem Hydraulikblock 10 vorhandenes Magnetventil angesteuert werden muß, um am Rad 9 einen Bremsdruck P einzusteuern, der dem Solldruck Ps entspricht.

Man kann P messen, jedoch mit Hilfe eines Hydraulikmodells 7, des Vordrucks $P_{vor}$ und der Seitenführungskraft Fs diesen auch berechnen. Ein Bremskraftschätzer 6 ermittelt die sich aus P, $V_r$ und $\alpha$ ergebende Bremskraft $F_B$, die der $V_x$-Beobachter 8 zur Berechnung benötigt.

In einem Addierer 3 kann dem Sollschlupf SO des Blocks 2 eine von einem Fahrzeugregler 11 kommende Sollschlupfabweichung $\Delta_{Ss}$ überlagert werden, woraus sich ein Sollschlupfs ergibt.

Bei der Erfindung müssen gemessen werden:

die Geschwindigkeit aller Räder      Vr

die Giergeschwindigkeit      $\dot{\psi}$

der Lenkwinkel      $\delta$

der Hauptbremszylinderdruck      $P_{vor}$ oder

die Radbremszylinderdrücke.

Folgende Größen werden gemäß dem Verfahren der Patentanmeldung P 40 30 653.4 geschätzt:

die Schräglaufwinkel      $\alpha$

die Seitenkräfte aller Räder      Fs

die Quergeschwindigkeit      $V_y$

Es folgen nun die näheren Betrachtungen der in den einzelnen Blöcken der Fig. 2 durchzuführenden Berechnungen.

1.) Sollschlupfberechnung (Block 2)

Der Sollwert des resultierenden Schlupfes S0 ist der Arbeitspunkt der Schlupfregelung eines Rades ohne Eingriff des Fahrzeugreglers.

Er wird gemäß der Gleichung

$$S0 \ = \ a0 \bullet Fr \ + \ a1 \ + \ a2/Vfr \qquad (1)$$

abhängig von der resultierenden Reifenkraft Fr und der freirollenden Radgeschwindigkeit Vfr berechnet. Die Größen a0, a1 und a2 sind dabei positive vorzugebende Konstanten. Bei großem Fr, d.h. hohem Reibbeiwert zwischen Rad und Strasse, ergibt sich damit ein großer Wert für S0, bei niederem Reibbeiwert dagegen ein kleiner Wert. Zu kleineren Vfr hin nimmt S0 zu. Die resultierende Reifenkraft wird vorzugsweise aus der mittleren Bremskraft Fb0 und der gefilterten Seitenkraft Fs0 (Fs0 z.B. aus Tiefpassfilterung von Fs) gemäß

$$Fr \ = \ \sqrt{Fb0^2 \ + \ Fs0^2} \qquad (2)$$

berechnet. Wegen möglicher Fehler in Fb0 und Fs0 ist es vorteilhaft, Fr nach obenhin zu begrenzen, damit keine zu großen Werte für S0 berechnet werden. Außerhalb des geregelten Zustands (kein Schlupf bei kleinem Bremsdruck) ist es günstiger, S0 gemäß

$$S0 \ = \ a1 \ + \ a2/Vfr \qquad (3)$$

zu berechnen, also a0 zu 0 zu machen.

Der Längsschlupfsollwert Ss, der vom Regler eingestellt werden soll, wird aus

$$Ss \ = \ S0 \ + \ \Delta Ss$$

bestimmt. Die Sollschlupfabweichung $\Delta Ss$ wird vom Fahrzeugregler gemäß Patentanmeldung P 40 30 704.2 festgelegt.

2.) Berechnung des Sollbremsdrucks Ps (Block 4)

Die Berechnung des einzustellenden Radbremsdrucks Ps erfolgt im allgemeinen in Abhängigkeit von der Regelabweichung (Ss-S). In bestimmten Zeiträumen allerdings erfordert die Schätzung der freirollenden Radgeschwindigkeit im Block 8 ein Unterbremsen eines Fahrzeugrades. Es sind also 2 Fälle zu unterscheiden.

a) Normaler Regelzustand:

Der Solldruck setzt sich zusammen aus

$$Ps \ = \ Pa \ + \ Pp \ + \ Pi, \qquad (5)$$

worin

Pa Absolutanteil,

Pp modifizierter Proportionalanteil,

Pi modifizierter Integralanteil

bedeuten. Der Anteil Pa wird berechnet aus

$$Pa = \frac{1}{cp} \cdot (Fbx - \frac{J}{r} \cdot bx) \qquad (6)$$

mit

$$Fbx = \begin{cases} Fb0 & \text{für } S \leq Ss \\ k \cdot Fb0 & \text{für } S > Ss, \end{cases} \qquad (7)$$

k vorzugebende Konstante (z.B. 0.96).

In Gl. (6) bedeuten

cp Verhältnis Bremsmoment/Bremsdruck,

r Radradius,

J Radträgheitsmoment,

bx Fahrzeugbeschleunigung

Die Bestimmung der Fahrzeugbeschleunigung bx wird weiter unten beschrieben. Der Proportionalanteil Pp wird gemäß

$$Pp = Kp \cdot \frac{Vfr}{Vfr + vp} \cdot (Ss - Sx), \qquad (8)$$

Kp Proportionalverstärkung

vp Konstante, z.B. ... 9 m/s

berechnet, worin Sx entweder der Schlupf S ist oder - um das Regelverhalten zu verbessern - ein Signal ist, das aus S durch Tiefpaßfilterung gewonnen wird.

Der modifizierte Integralanteil berechnet sich aus

$$\frac{d\,Pi}{dt} = \begin{cases} (1 + ki \cdot Pi) \cdot Ki \cdot (Ss - S) & \text{für } Ss > S \\ -fi5 \cdot Pi & \text{für } Ss \leq s \end{cases} \qquad (9)$$

worin ki, Ki und fi5 vorzugebende positive Konstanten sind. Pi wächst bei konstanter Regelabweichung (Ss - s) > 0 progressiv an, was für die Anpassung an positive Reibwertänderungen wichtig ist.

b) Unterbremster Anpassungszustand zur Längsgeschwindigkeitsschätzung:

Hier wird der Solldruck Ps gemäß

$$Ps = \frac{1}{cp} \cdot (Fbx \cdot r - \frac{J}{r} \cdot bx) \qquad (10)$$

berechnet.

Darin sind

cp Verhältnis Bremsmoment/Bremskraft,

J Radträgheitsmoment

r Radradius,

5

bx       Fahrzeuglängsbeschleunigung.
Die einzustellende Bremskraft Fbx wird durch

$$Fbx = Fb0 - \Delta Fb \qquad (11)$$

festgelegt, wobei in diesem Beispiel $\Delta Fb$ zu

$$\Delta Fb = k1 + k2 \cdot |\alpha| + (k3 + k4 \cdot |\alpha|) \cdot Fb0, \Delta Fb < Fb0 \qquad (12)$$

k1, k2, k3, k4      vorzugebende (experimentell zu bestimmende) positive Konstanten,
gewählt wird.

c) Besonderheiten beim Übergang vom unterbremsten Zustand in den normalen Regelzustand.

Nach Beendigung des unterbremsten Zustands soll der Bremsdruck wieder auf das zuvor herrschende Niveau gebracht werden. Unnötig große Regeleingriffe aufgrund des noch zu kleinen Bremsschlupfs sollen vermieden werden. In den ersten ca. 80 ms nach Beendigung des Anpassungszustands wird deshalb Pi konstant gehalten, in den ersten ca. 40 ms wird Pp auf Werte $\leq 0$ begrenzt.

3.) Schätzung der Bremskraft (Block 6)

Die Basis für die Berechnung der momentanen Bremskraft ist der Drallsatz fürs Rad. Nach Fb aufgelöst ergibt sich

$$Fb = \frac{1}{r} \cdot (\frac{J}{r} \cdot \frac{d\,Vr}{dt} + cp \cdot P). \qquad (13)$$

Die mittlere Bremskraft Fb0 ergibt sich durch eine Tiefpaßfilterung von Fb während des normalen Regelzustands gemäß

$$\frac{d\,Fb0}{dt} = fil \cdot (Fb - Fb0), \qquad (14)$$

worin der Filterkoeffizient fil vorzugsweise eine Funktion vom Schlupf S und dem Betrag des Schräglaufwinkels $\alpha$ ist, z.B.

$$fil = k5 + k6 \cdot S \cdot |\alpha|. \qquad (15)$$

Treten gleichzeitig hoher Schlupf und Schräglaufwinkel auf, so verschiebt sich die Eckfrequenz des Filters nach Gl. (14) nach oben. Näheres zur Schätzung der Bremskraft ergibt sich aus der Patentanmeldung P 40 24 815.1.

4.) Schätzung der Fahrzeuglängsgeschwindigkeit, der freirollenden Radgeschwindigkeit und der Bremsschlupfwerte (Block 8)

Das eingesetzte Verfahren zur Bestimmung der Fahrzeuglängsgeschwindigkeit Vx, der freirollenden Radgeschwindigkeiten Vfri, der Schlupfwerte

$$Si = 1 - Vri/Vfri, i = 1, ... , 4$$

und der Längsbeschleunigung

$$bx = b0 + b \qquad (16)$$

6

wird in der Patentanmeldung P 40 24 815.1 detailliert beschrieben. Hier soll nur auf eine Ergänzung eingegangen werden.

In P 40 24 815.1 wird der Schätzwert für die Fahrzeuglängsbeschleunigung b (t) berechnet aus

$$b(t) = - \frac{1}{mf} \cdot \sum_{i=1}^{4} Fbi(t)$$

worin mf die Fahrzeugmasse und Fbi die momentanen Bremskräfte der Räder sind. Bei kleinen Lenkwinkeln und nicht sehr großen Gier- und Quergeschwindigkeiten ist diese Berechnungsvorschrift ausreichend genau. Im hier beschriebenen Ausführungsbeispiel wird b(t) jedoch ohne diese Einschränkungen berechnet. Die Beziehung hierfür lautet

$$b(t) = - \frac{1}{mf} * [(Fs1 + Fs3) * sin\delta + (Fb1 + Fb3) * cos\delta + Fb2 + Fb4]$$

$$+ Vy * \dot{\psi}. \tag{17}$$

In Gl. (17) bedeuten
    Fs1      Seitenkraft vorne links,
    Fs3      Seitenkraft vorne rechts,
    Fb1      Bremskraft vorne links,
    Fb3      Bremskraft vorne rechts,
    Fb2      Bremskraft hinten rechts,
    Fb4      Bremskraft hinten links,
    $\delta$      Lenkwinkel der Vorderachse,
    Vy      Fahrzeugquergeschwindikgeiten,
    $\psi$      Gierwinkelgeschwindigkeiten.

Die Schätzung von Vx kann - wie in P 40 24 815.1 beschrieben - durch jedes der Räder gestützt werden. Um Bremskraftverluste möglichst klein zu halten, wird jedoch immer höchstens ein Rad zur Stützung herangezogen. Die Auswahl eines geeigneten Rads erfolgt nach diesen Kriterien:

a) Das Rad muß in Regelung sein (siehe Abschnitt 5.2)

b) die Radbeschleunigung muß in der Nähe der Fahrzeugbeschleunigung liegen:

$$bx - k7 < \frac{d\ Vr}{dt} < bx + k8, \tag{18}$$

c) der Schlupf darf nicht zu groß sein:

$$S < Ss0 + k9 \tag{19}$$

d) wenn das Rad Antriebsrad ist, darf Vr nicht zu weit über der freirollenden Radgeschwindigkeit liegen (Rad könnte Antriebschlupf haben):

$$Vr < Vfr + k10, \tag{20}$$

e) der Sollschlupf am Rad darf nicht durch den Fahrzeugregler erhöht sein:

$$\Delta Ss \leq 0. \tag{21}$$

Erfüllen mehrere Räder Bedingung a) bis e), so wird eine bervorzugte Reihenfolge der stützenden Räder eingehalten, z.B.:

7

auf VL folgt VR,

auf VR folgt HL,

auf HL folgt HR,

auf HR folgt VL.

Die Größen k7 bis k10 sind positive Konstanten, die im Einzelfall geeignet gewählt werden.

Erfüllt keines der Fahrzeugräder die Bedingungen a) bis e), so wird Vx ungestützt extrapoliert. Dabei kann ein Schätzfehler in Vx entstehen. Im ungünstigsten Fall folgt daraus ein Schätzfehler im Schlupf S, der so groß ist, daß die Bedingung c) fälschlicherweise dauernd für alle Räder verletzt wird und ein Abbau des Schätzfehlers durch Stützung über lange Zeit verhindert wird. Dieser Fall läßt sich dadurch vermeiden, daß statt einer konstanten Schlupfschranke k9 eine zeitlich wachsende Schranke für die Radgeschwindigkeit benutzt wird, solange eine Stützung der Vx-Schätzung unterbleibt. Die Bedingung c) lauetet dann:

$$Vr > (1 - S0) \cdot Vfr - kx1 - kx2 \cdot Tx, \text{ mit}$$

Tx        Zeit ohne Stützung von Vx,

kx1, kx2     positive Konstanten;

kx2 soll etwa dem maximal zu erwartenden Fehler der Längsbeschleunigung bx entprechen.

5.) Sondermaßnahmen

5.1) Bei positiven Reibwertsprüngen

Nimmt während des Bremsvorganges der Reibbeiwert der Fahrbahn plötzlich zu, so entsteht eine Regelabweichung im Schlupf. Der Regler 7 antwortet mit Bremsdruckerhöhung, bis Schlupf und Sollschlupf wieder übereinstimmen. Aufgrund der wachsenden Bremskraft Fb0 nimmt auch der Sollschlupf S0 zu. Dieser Vorgang endet, wenn der Reibbeiwert zwischen Reifen und Straße voll ausgenutzt wird. Um Bremskraftverluste klein zu halten, wird dieser Optimierungsvorgang dadurch beschleunigt, daß bei längeranhaltender Regelabweichung S < Ss der Schlupf S0 zusätzlich erhöht wird. Im vorliegenden Beispiel wird die Sollschlupfberechnung nach Gl. (1) abgeändert, wenn die modifizierte I-Anteil Pi einen bestimmten Wert überschreitet:

$$S0 = a0 \cdot Fr + a1 + a2/Vfr + k11 \text{ für Pi} > k12, \qquad (1b)$$

k11, k12     positive Konstanten.

5.2) Beginn und Beendigung der Regelung

Die Regelung eines Rades beginnt, wenn dort der Sollschlupf überschritten wird und der Hauptbremszylinderdruck über einem gewissen Schwellwert (z.B. 2 bar) liegt.

Die Regelung an allen Rädern wird beendet, wenn an keinem der Räder der zur Schlupfregelung erforderliche Druck eingespeist werden kann; das ist der Fall, wenn für jedes Rad gilt:

$$Pvor < \tfrac{1}{cp} \cdot (Fb0 \cdot r - \tfrac{J}{r} \cdot bx) \qquad (22)$$

Die Regelung aller Räder wird auch dann beendet, wenn die Fahrzeuglängsgeschwindigkeit einen Schwell-wert unterschreitet:

$$Vx < Vabr. \qquad (23)$$

Treten an der Hinterachse sehr große Schräglaufwinkel auf (z.B. > 50 grad), dann wird die Regelung ebenfalls beendet. Dadurch kann vermieden werden, daß das außer Kontrolle geratenen Fahrzeug in eine nicht gewünschte Richtung (z.B. rückwärts) weiterrollt.

Befindet sich ein Rad außerhalb des geregelten Zustands, so ist das zugehörige Druckeinlaßventil dauernd geöffnet.

5.3) Berücksichtigung des Motorschleppmoments in der Vx-Schätzung

Im allgemeinen wird ein vorhandenes Motorschleppmoment durch die in Anlage 2 beschriebene Schätzung des Beschleunigungsoffsets (b0) kompensiert. In bestimmten Situationen ist jedoch eine zusätzliche Maßnahme zur Kompensation dieses Störeinflusses vorteilhaft. Eine solche typische Situation tritt z.B. ein, wenn das Fahrzeug auf hohem Reibbeiwert nur leicht abgebremst wird und auf die Antriebsräder durch Einkuppeln zusätzlich plötzlich ein starkes Motorschleppmoment wirkt. Die Antriebsräder bekommen dadurch Bremsschlupf und werden geregelt. Die nicht angetriebenen Räder laufen jedoch vollkommen stabil und bleiben zunächst ungeregelt. Durch das zusätzliche Motorschleppmoment nimmt die wahre Fahrzeugverzögerung zu, nicht aber die aus Gl. (17) geschätzte. Die geschätzte Fahrzeuggeschwindigkeit nimmt dann nicht genügend stark ab und die berechneten Schlupfwerte werden zu groß. In ungünstigen Fällen gehen deshalb auch die nicht angetriebenen Räder kurzzeitig unnötigerweise in Regelung, bis der Beschleunigungsoffset den Schleppmomenteinfluß kompensiert hat. Dieser Fall läßt sich vermeiden indem die vom Motorschleppmoment verursachte zusätzliche Bremskraft in Gl. (17) berücksichtigt wird. Für heckgetriebene Fahrzeuge gilt dann für b(t)

$$b(t) = -\frac{1}{mf} \cdot [(Fs1 + Fs3) \cdot \sin\delta + (Fb1 + FB3) \cdot \cos\delta + Fb2 + Fb4$$

$$+ \; Fschlepp] + Vy \cdot \dot{\psi}: \hspace{4cm} (24a)$$

bei Frontantrieb gilt

$$b(t) = -\frac{1}{mf} \cdot [(Fs1 + Fs3) \cdot \sin\delta + (Fb1 + Fb3) \cdot \cos\delta + Fb2 + Fb4$$

$$+ \; Fschlepp \cdot \cos\delta] + Vy \cdot \dot{\psi}. \hspace{3cm} (24b)$$

Verfügt das Fahrzeug über entsprechende Maßeinrichtungen, so kann Fschlepp mit Hilfe bekannter Verfahren aus der Gangstufe und der Motordrehzahl bestimmt werden (z.B. aus der Schleppmomentkennlinie). Besteht diese Möglichkeit nicht, so kann - für den Fall, daß die nicht getriebenen Räder stabil bei kleinem Schlupf laufen - eine vorsichtige Abschätzung vorgenommen werden: Gilt nämlich für die Räder einer Fahrzeugseite (z.B. der linken)

Sg > Sn und Fbg < Fbn mit $\qquad$ (25)

Sg $\qquad$ Schlupf am angetriebenen Rad,
Sn $\qquad$ Schlupf am nicht angetriebenen Rad,
Fbg $\qquad$ geschätzte Bremskraft am angetriebenen Rad,
Fbn $\qquad$ geschätzte Bremskraft am nicht angetriebenen Rad,

und sind Schräglaufwinkel und Radlasten des angetriebenen und des nicht angetriebenen Rades ungefähr gleich, so kann geschlossen werden, daß am linken Antriebsrad eine zusätzliche Kraft

Fschlepp (links) $\geq$ Fbn - Fbg $\qquad$ (26)

wirkt. Falls Bedingung (25) nicht erfüllt ist, kann lediglich vermutet werden, daß

Fschlepp (links) $\geq$ 0

gilt. Analoges gilt für die beiden Räder der anderen Fahrzeugseite. Als grobe Abschätzung für Fschlepp ergibt sich

Fschlepp $\approx$ Fschlepp (links) + Fschlepp (rechts). $\qquad$ (27)

5.4) Begrenzung der Sollbremsdrücke

Bekannte Verfahren zur Erhöhung der Fahrstabilität bei ABS-Bremsungen sind die select low-Regelung der Hinterachse und die Giermomentaufbauverzögerung bzw. Giermomentabschwächung.

Im hier beschriebenen System wird die Fahrstabilität durch geeignete Einstellung der Bremsschlupfsollwerte durch den Fahrzeugregler sichergestellt. In bestimmten Situationen kann es für die Beherrschbarkeit des Fahrzeugs vorteilhaft sein, unterstützende Maßnahmen zur Verlangsamung von Gierbewegungen des Fahrzeugs vorzusehen. Um beispeilsweise den Aufbau der Giergeschwindigkeit beim Anbremsvorgang unter µ-split-Bedingungen zu verlangsamen, kann die zulässige Druck- bzw. Bremskraftdifferenz zwischen den linken und rechten Fahrzeugrädern begrenzt werden. Dazu wird im Anschluß an die Berechnung der Solldrücke (Fig. 2, Block (4)) aller Fahrzeugräder ein Block eingefügt, der eine Begrenzung des jeweils höheren Solldrucks einer Achse bewirkt. Die begrenzten Solldrücke Ps' werden danm dem Block (5) in Fig. 2 zugeführt. Die Begrenzungsvorschriften lauten

$$Ps1' = \begin{cases} Ps1 & \text{für } Ps1 < Ps3 + dvp \\ Ps3 + dpv & \text{für } Ps1 > Ps3 + dvp \end{cases}$$

$$Ps3' = \begin{cases} Ps3 & \text{für } Ps3 < Ps1 + dpv \\ Ps1 + dpv & \text{für } Ps3 > Ps1 + dpv \end{cases}$$

$$Ps2' = \begin{cases} Ps2 & \text{für } Ps2 < Ps4 + dph \\ Ps4 + dph & \text{für } Ps2 > Ps4 + dph \end{cases}$$

$$Ps4' = \begin{cases} Ps4 & \text{für } Ps4 < Ps2 + dph \\ Ps2 + dph & \text{für } Ps4 > Ps2 + dph, \end{cases}$$

(28)

Index 1   vorne links,
Index 2   hinten rechts,
Index 3   vorne rechts,
Index 4   hinten links.

Abhängig davon, wie man die zulässigen Differenzdrücke dpv und dph wählt, lassen sich beliebige Giermomentabschwächungen realisieren - von Individualregelung bis select-low-Regelung. Die Begrenzungen können auch zeitlich variabel gestaltet werden, womit sich z.B. auch eine Giermomentaufbauverzögerung verwirklichen läßt.

Eine mögliche Realisierung für die Hinterachse ist z.B.

$$\frac{d\,dph}{dt} = \begin{cases} k13 & \text{für } |Ps2-Ps4| > dph \ \hat{} \ dph < dphmax \\ -k14 & \text{für } |Ps2-Ps4| \leq dph \ \hat{} \ dph > dphmin \\ 0 & \text{für } |Ps2-Ps4| > dph \ \hat{} \ dph > dphmax \\ 0 & \text{für } |Ps2-Ps4| \leq dph \ \hat{} \ dph < dphmin \end{cases}$$

(29)

mit
k13, k14   konstante Änderungsraten des zulässigen Differenzdrucks,
dphmin   untere Grenze der zulässigen Druckdifferenz,
dphmax   obere Grenze der zulässigen Druckdifferenz.

Ebenso kann der zulässige Differenzdruck an der Vorderachse gebildet werden.

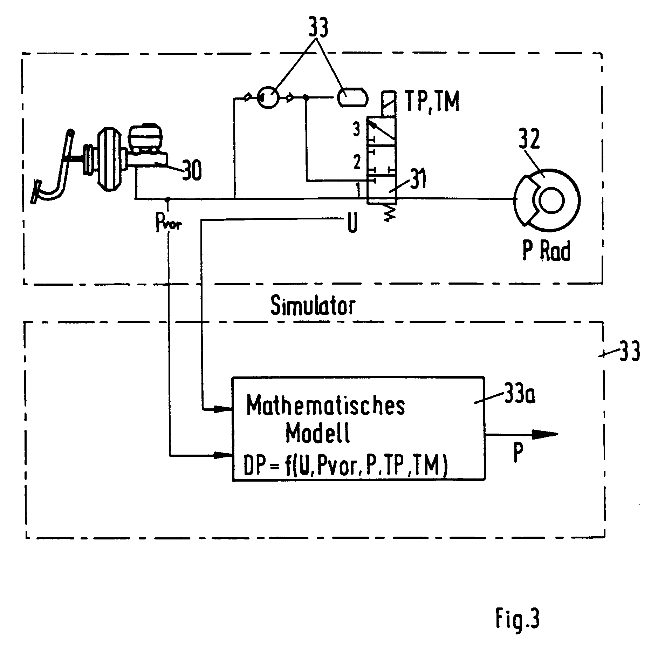

6.) Entwurf eines Hydraulikmodells (Block 7) auf der Basis des in Fig. 3 dargestellten Systems.

Dort bedeuten:

30 einen Hauptbremszylinder

31 ein Dreistellungsventil

32 eine Radbremse

33 ein Simulator, der ein mathematisches Modell 33a beinhaltet, dem der jeweilige Vordruck Pvor und das Ansteuersignal U zugeführt wird und der den Bremsdruck berechnet.

Die Druckänderungen DP des hydraulischen Systems werden durch eine algebraische Gleichung beschrieben von der Form:

$$DP = f(P, Pvor, TP, TM, U^+, U^-)$$

wobei TP und TM Ansprechzeiten und $U^+$ und $U^-$ Aussteuerzeiten sind.

Die Betätigung des Ventils wird durch die Ventilansteuerzeit U festgelegt, wobei folgenden Vereinbarungen gelten:

$U^+ > 0$       Das Ventil wird für die Zeitdauer $U^+$ in die Stellung 1 gebracht (Druckaufbau).

$U^- < 0$       Das ventil wird für die Zeitdauer $U^-$ in die Stellung 3 gebracht (Druckabbau).

$U^+ = 0$       Das Ventil wird für die Zeitdauer $U^+$ in die Stellung 2 gebracht (Druckhalten).

Der Absolutdruck P wird durch Integration obiger Gleichung berechnet. Um für einen vorgegebenen Solldruck Ps = P + DP die nötige Ventilansteuerzeit zu berechnen sollte die Funktion ohne großen numerischen Aufwand nach $U^+$ bzw. $U^-$ auflösbar seine.

Aufstellen der Modellgleichungen:

Für den Volumenstrom dV/dt durch das Ventil wird die Bernoulli-Gleichung angesetzt:

$$dV/dt = A \cdot \sqrt{2/r} \cdot P_{diff} \qquad\qquad (30)$$

A:      Blendenquerschnitt

r:      Dichte der Bremsflüssigkeit

$P_{diff}$: Druckdifferenz über das Ventil

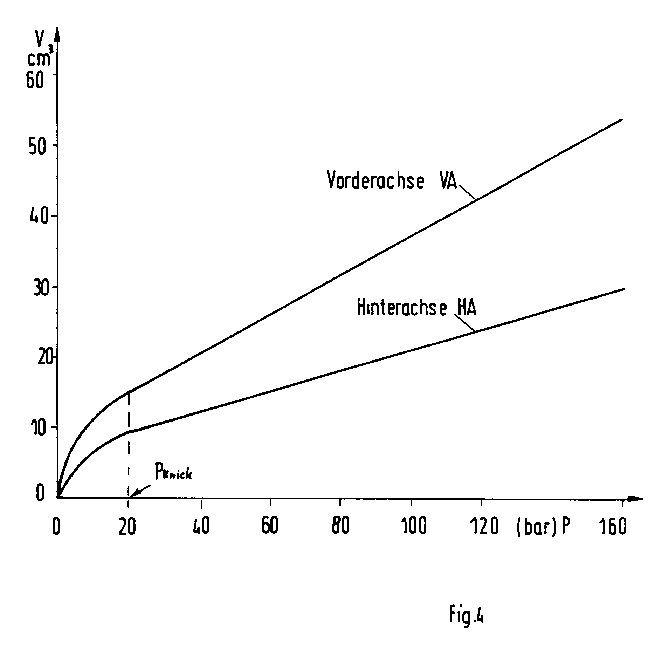

Der Zusammenhang zwischen Druckänderung und Volumenänderung wird näherungsweise über die Druck-Volumenkennlinie beschrieben (typischer Verlauf vgl. Fig. 4).

$$P = f(V) \qquad (31)$$

dabei gilt

$$dP/dv = f_1(V) \quad 0 <= P <= P_{knick}$$
$$dP/dV = const \quad P_{knick} < P < Pmax$$

$P_{knick}$:      Übergang des nichtkinearen Teils der P(V)-Kennlinie in den linearen Teil

Dabei wird angenommen, daß die Nichtlinearität in der P(V)-Kennlinie aus

- Elastizitäten in den Gummidichtungen
- Losen in den Bremszangen bzw.
- Kompressibilität der Bremsflüssigkeit (Lufteinschlüsse)

resultiert.

Die P(V)-Kennlinie wird nun im nichtlinearen Teil durch einen quadratischen und im linearen Teil durch einen linearen Ansatz approximiert.

$$P(V) = a \cdot V^2 + b \cdot V \qquad\qquad \text{für } P <= P_{knick} \qquad\qquad (32)$$
$$b > 0 \text{ und } a > 0$$

11

damit

$$V(P) = \sqrt{P/a + (b/2a)^2} - b/2a \qquad (33)$$

$$dP/dV = 2aV + b \qquad (34)$$

mit $k = A^*\sqrt{2/r}$ und Einsetzen von (32), (33), und (34) in (30) ergibt sich

$$dP/dt = \sqrt{4ak^2 P + bk^2} \cdot \sqrt{P_{diff}} \qquad (35)$$

Für den linearen Teil der Druck-Volumenkennlinie gelten die folgenden Beziehungen:

$$P(V) = c \cdot V \qquad \text{für } P > P_{kinck} \qquad (36)$$
$$c > 0$$

$$V(P) = (1/c) \cdot P \qquad (37)$$

$$dP/dV = c \qquad (38)$$

Einsetzen von (36), (37) und (38) in (30) ergibt:

$$dP/dt = kc \cdot \sqrt{P_{diff}} \qquad (39)$$

Beim Übergang in die diskrete Zustandsform ergeben sich die folgenden Gleichungen:

$$P_{k+1} = P_k + \sqrt{4ak^2 P_k + bk^2} \cdot \sqrt{P_{diff\ k}} \cdot DT_k \quad \text{für } P <= P_{knick} \qquad (40)$$
$$P_{k+1} = P_k + kc \cdot \sqrt{P_{diff\ k}} \cdot DT_k \qquad \qquad \text{für } P > P_{knick} \qquad (41)$$

Die Größe $DT_k$ entspricht dabei der tatsächlichen Ventilöffnungszeit. Da bei Stromänderungen im Ventilanker das Magnetfeld, das den Anker bewegt, sich nur verzögert aufbaut, und es außerdem bei der Verschiebung des Ankers zu Reibungseffekten kommt muß $DT_k$ noch um die Ansprechzeiten TP bzw. TM korrigiert werden. Dabei gilt:

$$DT_k = U^+ - TP \qquad \text{für } DT_k > 0 \qquad \text{entspricht der Ventil-} \qquad (42)$$
$$\text{und } U^+ > TP \qquad \text{stellung 1 in Fig. 3}$$
$$\text{(Druckaufbau)}$$

$$DT_K = U^+ = 0 \qquad \text{für } DT_k = 0 \qquad \text{entspricht der Ventil-} \qquad (43)$$
$$\text{stellung 2 in Fig. 3}$$
$$\text{(Druckhalten)}$$

$$DT_k = U^- + TM \qquad \text{für } DT_k < 0 \qquad \text{entspricht der Ventil-} \qquad (44)$$
$$\text{und } U^- < -TN \qquad \text{stellung 3 in Fig. 3}$$
$$\text{(Druckabbau)}$$

$$P_{diff\ k} = Pvor_k - P_k \qquad \text{für } DT_k > 0 \qquad \text{(Druckaufbau)} \qquad (45)$$

$$P_{diff\ k} = P_k \qquad \text{für } DT_k < 0 \qquad \text{(Druckabbau)} \qquad (46)$$

Die Größen TP bzw. TM werden als bekannt oder meßbar vorausgesetzt, $P_k$ und $Pvor_k$ werden für die Validierung des Modells gemessen, $U^+$ bzw. $U^-$ sind vorgegeben und stellen die Gesamtansteuerzeit des Ventils dar (vgl. Fig. 3).

Da in Gleichung (40) die zu identifizierenden Parameter nichtlinear eingehen und eine Quadrierung der Gleichung aus numerischen Gründen zu vermeiden ist, wurde der Term

$\sqrt{4ak^2P_k + bk^2}$ linearisiert und durch $X_1 P_k + X_2$

ersetzt, wobei der Linearisierungsfehler durch die nun zu identifizierenden Parameter $X_1$ und $X_2$ berücksichtigt wird. Obiger Term kann auch durch ein Polynom höherer Ordnung in $P_k$ mit zusätzlichen Parametern $X_1$ angenähert werden.

Mit folgenden Abkürzungen

$$Z_k = P_{k+1} - P_k \qquad \text{(Meßgröße)} \qquad (47)$$
$$A_{1\ k} = P_k \cdot \sqrt{P_{diff\ k}} \cdot DT_k \qquad \text{(Meßparameter} \qquad (48)$$
$$A_{2\ k} = \sqrt{P_{diff\ k}} \cdot DT_k \qquad \text{für } P <= Pknick) \qquad (49)$$
$$A_{3\ k} = \sqrt{P_{diff\ k}} \cdot DT_k \qquad \text{(für } P > P_{knick}) \qquad (50)$$

ergibt sich ein Hydraulikmodell, das linear in den zu identifizierenden Parameter und inventierbar, d.h. nach $DT_k$ auflösbar, ist:

$$Z_k = X_1 \cdot A_{1\ k} + X_2 \cdot A_{2\ k} \qquad \text{(für } P <= P_{knick}) \qquad (51)$$
$$Z_k = X_3 \cdot A_{3\ k} \qquad \text{(für } P > P_{knick}) \qquad (52)$$

Da zwischen Druckaufbau bzw. Druckabbau unterschieden werden muß, sind auch die gesuchten Modellparameter für Auf- bzw. Abbau verschieden. Die Gleichungen (51), (52) stellen also ein Modell sechster Ordnung dar.

Dies ist nur eine Form der Modellgleichungen. Ebenso ist es möglich die Druck-Volumen-Kennlinie in mehr als zwei Bereiche zu unterteilen und diese ebenfalls durch Polynome höheren Grades zu approximieren. Dabei ist zu beachten, daß die Modellordnung zu groß werden kann, und das System dadurch überparameterisiert ist. Das Modell kann auch nichtlinear in den Parametern sein, was aber einen erhöhten numerischen Aufwand bei der Minimierung des Fehlerkriteriums bedeutet.

Für den Einsatz in der Radregelung wurden zwei Modelle aufgestellt, validiert und getestet (Ansätze A bzw. B).

Ansatz A

Als Modell wurden die Gleichungen der Form (51), (52) verwendet, wobei auch für $P > P_{knick}$ die Druck-Volumen-Kennlinie durch eine Parabel mit anderen Koeffizienten approximiert wird.

$$Z_k = X_1 \cdot A_{1\,k} + X_2 \cdot A_{2\,k} \qquad \text{(für } P \le P_{knick}) \qquad (53)$$

$$Z_k = X_3 \cdot A_{1\,k} + X_4 \cdot A_{2\,k} \qquad \text{(für } P > P_{knick}) \qquad (54)$$

Validierung des Modells:

Aus geregelten Geradeaus-Bremsungen auf unterschiedlichen Fahrbahnen (um möglichst alle Druckbereiche zu erfassen) wurden die Ansteuerzeiten U des Reglers, der Radbremszylinderdruck P des zugehörigen Rades und der Vordruck Pvor alle 20 ms erfaßt. Die Größen TP und TM wurden aus diesen Meßschrieben abgelesen und direkt in die Meßgleichung eingesetzt. Damit sind bis auf die zu identifizierenden Parameter $X_i$ alle Terme in (53), (54) zu allen Zeitpunkten k (5000<k<6000) bekannt. Die Schätzwerte für die Parameter $X_i$ können mit bekannten Least-Squares-Verfahren berechnet werden.

Da das Modell lediglich einen algebraischen Zusammenhang darstellt, werden keine dynamischen Effekte in der Drucksimulation wiedergegeben. Um zum Beispiel in der Anbremsphase (groß und schnelle Druckänderungen) oder beim Umschalten des Ventils von Daueraufbau auf Dauerabbau und umgekehrt dennoch eine gute Druckschätzung zu erhalten, wurde das Modell um weitere Parameter ergänzt, die nachträglich im Versuch angepaßt werden müssen. Dadurch sind nicht alle Parameter des Modells automatisch bestimmbar, die entscheidenden Parameter gehen jedoch linear in die Schätzgleichung ein und sind deshalb einfach und schnell, mit bewährten Methoden zu berechnen.

Ansatz B

Die Schätzgleichungen (53), (54) wurden um sämtliche Parameter, die die Nichtlinearitäten und dynamische Effekte beschreiben, ergänzt. Das Minimierung um der Fehlerquadratsumme wird durch Anwendung bekannter Optimierungsverfahren durchgeführt (z.B. Simplexverfahren oder Gradientenverfahren). Dies hat den Vorteil, daß alle Parameter auf einmal geschätzt werden können, die Schätzung aber aufgrund der sehr zeit- und rechenintensiven Suchmethode sehr lange dauert. Aus diesem Grund ist auch die Ordnung des Modells begrenzt.

Seitenkraftkorrektur

Da die entscheidenden Parameter des Modells nur aus Geradeaus-Bremsungen identifiziert wurden, konnte ein weiterer Effekt zunächst mit keinem der beiden Ansätze modelliert werden. Bei großen Querkräften auf das Rad (z.B. Kreisfahrt auf hohem Reibwert mit großer Geschwindigkeit) wird die Bremshydraulik "weicher", was sich in einem wesentlich verlangsamten Druckanstieg im unteren Druckbereich äußert. Aus diesem Grund wirde die Modelgleichung (51) mit einem Korrekturterm versehen, der die Druckänderungen im unteren Druckbereich abhängig von der Seitenkraft Fs korrigiert.

$$Z_k = (1.0 - fc0 \cdot Fs) \cdot [X_1 \cdot A_{1\,k} + X_2 \cdot A_{2\,k}] \quad \text{(für } P \le P_{knick})$$

Sind die Paramter $X_i$ geschätzt, läßt sich auch der zusätzliche Parameter fc0 durch Aufnahme von Messungen mit verschiedenen Querkräften identifizieren.

Betrieb von Modell (Block 7) und inversem Modell (Block 5) im Radschlupfregler.

Im Radschlupfregler wird der Drucksollwert Ps = $P_{k+1}$ für den Zeitpunkt k + 1 berechnet. Aus den Gleichungen (47) bis (50) und (53) bzw. (54), kann das zugehörige $DT_k$ berechnet werden (inverses Modell). Aus den Gleichungen (42) bis (46) wird dann die Gesamtansteuerzeit U für die entsprechende Druckänderung bestimmt.

Die direkte Anwendung von Gleichungen (42) bis (46) und (53) bzw. (54) ergeben den Druck für den nächsten Abtastzeitpunkt (Modell).

**Patentansprüche**

1. Verfahren zum Betrieb eines Antiblockierregelsystems mit mehreren Regel Kanälen für Räder oder Radgruppen eines Fahrzeugs, bei dem der Radschlupf S der einzelnen Räder ermittelt und mit einem Sollbremsschlupf S0 verglichen wird und bei dem aufgrund der Abweichung des Radschlupfs S vom Sollschlupf S0 der Bremsdruck des Rads variiert wird, dadurch gekennzeichnet, daß der Sollbremsschlupf S0 mit Hilfe der Fahrzeuggeschwindigkeit oder der Geschwindigkeit des frei rollenden Rads der sich im normalen Regelbetrieb einstellenden Bremskraft und Seitenkraft ermittelt wird, daß aus dem Sollschlupf S0 und dem aus Radumfangsgeschwindigkeit und freirollender Radgeschwindigkeit ermittelten Radschlupf S sowie der Fahrzeuggeschwindigkeit $V_x$ bzw. der Geschwindigkeit des freirollenden Rads $V_{fr}$ sowie der Fahrzeuglängsbeschleunigung bx und dem Schräglaufwinkel $\alpha$ der Sollbremsdruck Ps ermittelt wird, und daß mittels eines inversen Hydraulikmodells aus dem Sollbremsdruck PS, dem Vordruck Pvor und der Seitenkraft Fs die Ansteuerzeit U für das Ventil ermittelt wird.

2. Verfahren nach Anspruch 1, dadurch gekennzeichnet, daß ein $V_x$-Beobachter vorgesehen ist, der mit Hilfe der Giergeschwindigkeit $\dot{\psi}$, des Lenkwinkels $\delta$, der Quergeschwindigkeit Vy, der Seitenkraft Fs und der Bremskraft $F_B$ die frei rollende Radgeschwindigkeiten $V_{fr}$ und die Fahrzeuglängsgeschwindigkeit $V_x$ ermittelt.

3. Verfahren nach Anspruch 1 oder 2, dadurch gekennzeichnet, daß die Bremskraft $F_b$ und die gefilterte Bremskraft Fb0 unter Einbeziehung des Bremsdrucks P, der Radgeschwindigkeit $V_R$ und des Schräglaufwinkels $\alpha$ abgeschätzt wird.

4. Verfahren nach Anspruch 3, dadurch gekennzeichnet, daß der Bremsdruck P mittels eines Hydraulikmodells aus der Ansteuerzeit U, dem Vordruck Pvor und der Seitenkraft Fs ermittelt wird.

5. Verfahren nach einem der Ansprüche 1-4, dadurch gekennzeichnet, daß die Seitenkraft Fs und die Quergeschwindigkeit Vy mittels eines Beobachters abgeschätzt werden, dem die Fahrzeuglängsgeschwindigkeit Vx, die Fahrzeuglängsbeschleunigung Vx, der Bremsdruck Fb und der Schlupfwert S zugeführt werden.

6. Verfahren nach Anspruch 5, dadurch gekennzeichnet, daß die Werte Vx, Vx, Fb und S selbst Schätzwerte sind.

7. Verfahren nach einem der Ansprüche 1-6, dadurch gekennzeichnet, daß der Regler einem Fahrdynamikregler unterlagert ist, der seinerseits in Abhängigkeit von am Fahrzeug ermittelten Meßgrößen zur Verbesserung der Beherrschbarkeit des Fahrzeugs Sollschlupfwerte für die Fahrzeugräder vorgibt und die Sollschlupfwerte des Antiblockierregelsystems entsprechend verändert.

**Claims**

1. Method of operation of an anti-blocking control system with a plurality of control channels for wheels or groups of wheels of a vehicle, in which the wheel slip S of the individual wheels is determined and compared with a reference brake slip S0 and in which the brake pressure of the wheel is varied on the basis of the deviation of the wheel slip S from the reference slip S0, characterized in that the reference brake slip S0 is determined with the aid of the vehicle speed or the speed of the freely coasting wheel of the braking force and side force which occurs during normal control operation, in that the reference brake pressure Ps is determined from the reference slip S0 and the wheel slip S, determined from wheel circumferential speed and freely coasting wheel speed, as well as the vehicle speed $V_x$ and the speed of the freely coasting wheel $V_{fr}$ as well as the longitudinal acceleration bx of the vehicle and the

slip angle $\alpha$, and in that the actuation time U for the valve is determined from the reference brake pressure PS, the upstream pressure $P_{vor}$ and the side force Fs by means of an inverse hydraulic model.

2. Method according to Claim 1, characterized in that a $V_x$ monitor is provided which, with the aid of the yawing speed $\dot{\psi}$, the steering angle $\delta$, the lateral speed Vy, the side force Fs and the braking force $F_B$, determines the freely coasting wheel speeds $V_{fr}$ and the longitudinal speed $V_x$ of the vehicle.

3. Method according to Claim 1 or 2, characterized in that the braking force $F_b$ and the filtered braking force FbO is estimated with the inclusion of the braking pressure P, the wheel speed $V_R$ and the slip angle $\alpha$.

4. Method according to Claim 3, characterized in that the braking pressure P is determined by means of an hydraulic model from the actuation time U, the upstream pressure $P_{vor}$ and the side force Fs.

5. Method according to one of Claims 1-4, characterized in that the side force Fs and the lateral speed Vy are estimated by means of a monitor to which the longitudinal speed Vx of the vehicle, the longitudinal acceleration Vx of the vehicle, the braking pressure Fb and the slip value S are fed.

6. Method according to Claim 5, characterized in that the values Vx, Vx, Fb and S themselves are estimated values.

7. Method according to one of Claims 1-6, characterized in that the controller is subordinate to a travel dynamic controller which itself prescribes reference slip values for the vehicle wheels as a function of measured values determined at the vehicle in order to improve the controlability of the vehicle and appropriately changes the reference slip values of the anti-blocking control system.

**Revendications**

1. Procédé de mise en oeuvre d'un système de régulation antiblocage comportant plusieurs canaux de régulation pour les roues ou les groupes de roues d'un véhicule, procédé selon lequel on détermine séparément le glissement de roue S des différentes roues et on compare à un glissement de freinage de consigne SO et à partir de la différence entre le glissement de roue S et le glissement de consigne SO on modifie la pression de frein sur la roue, procédé caractérisé en ce qu'on détermine le glissement de frein de consigne SO à l'aide de la vitesse du véhicule ou de la vitesse de la roue roulant librement pour la force de freinage et la force latérale s'établissant en mode de régulation normal, et à partir du glissement de consigne SO et du glissement de roue S obtenu à partir de la vitesse périphérique de la roue et de la vitesse de roue pour une roue roulant librement ainsi qu'à partir de la vitesse $V_x$ du véhicule ou de la vitesse de la roue roulant librement $V_{fr}$ et de l'accélération longitudinale bx du véhicule et de l'angle de déplacement en biais $\alpha$ on détermine la pression de freinage de consigne Ps et à l'aide d'un modèle hydraulique inverse, à partir de la pression de freinage de consigne PS, de la pression avant Pav et de la force latérale Fs on détermine la durée de commande U de la soupape.

2. Procédé selon la revendication 1, caractérisé en ce qu'il est prévu un observateur $V_x$ qui, à l'aide de la vitesse de giration $\dot{\psi}$ de l'angle de guidage $\delta$, de la vitesse transversale Vy, de la force latérale Fs et de la force de freinage détermine les trois vitesses de roues roulant librement $V_{fr}$ et la vitesse longitudinale $V_x$ du véhicule.

3. Procédé selon la revendication 1 ou 2, caractérisé en ce qu'on évalue la force de freinage $F_b$ et la force de freinage filtrée FbO en tenant compte de la pression de frein P, de la vitesse de roue $V_R$ et de l'angle de déplacement en biais $\alpha$.

4. Procédé selon la revendication 3, caractérisé en ce qu'on détermine la pression de frein P à l'aide d'un modèle hydraulique à partir du temps de commande U, de la pression avant Pav et de la force latérale Fs.

16

5. Procédé selon l'une des revendications 1 à 4, caractérisé en ce qu'on évalue la force latérale Fs et la vitesse transversale Vy à l'aide d'un observateur qui reçoit la vitesse longitudinale du véhicule Vx, l'accélération longitudinale du véhicule bx, la pression de frein Fb et la valeur de glissement S.

6. Procédé selon la revendication 5, caractérisé en ce que les valeurs Vx, bx, Fb et S sont elles-mêmes des valeurs évaluées.

7. Procédé selon l'une des revendications 1 à 6, caractérisé en ce que le régulateur est soumis à un régulateur dynamique de déplacement qui prédétermine lui-même, en fonction de grandeurs mesurées déterminées sur le véhicule, des valeurs de glissement de consigne pour les roues du véhicule et modifie les valeurs de glissement de consigne de manière correspondante pour le système de régulation antiblocage pour améliorer la tenue de route du véhicule.

Fig.1a

Fig.1b

Steuerungen + Kopplungen
(select low, GMA,
Referenzkopplungen)

Fahrzeugregler

Fahrzeug

Fahrzeugmessgrössen
und/oder Beobachter

Rückführung des Fahrzeugzustandes

EP 0 503 025 B1

Fig.2

Fig.3

Fig.4